# EUROPÄISCHE PATENTSCHRIFT

(11) **EP 3 447 023 B1**
(45) Veröffentlichungstag und Bekanntmachung des Hinweises auf die Patenterteilung: **25.03.2020**
(21) Anmeldenummer: 18184464.8
(22) Anmeldetag: 19.07.2018
(51) Int. Cl.: B60P 1/02, B66F 9/06

(54) **AUTONOMES FLURFÖRDERZEUG, INSBESONDERE KOMMISSIONIER-FLURFÖRDERZEUG**
AUTONOMOUS INDUSTRIAL TRUCK, IN PARTICULAR INDUSTRIAL TRUCK FOR PICKING
CHARIOT DE MANUTENTION AUTONOME, EN PARTICULIER CHARIOT DE COMMISSIONNEMENT

(30) Priorität: 24.08.2017 DE 102017119421
(43) Veröffentlichungstag der Anmeldung: 27.02.2019
(73) Patentinhaber: Linde Material Handling GmbH, 63743 Aschaffenburg (DE); STILL GmbH, 22113 Hamburg (DE)
(72) Erfinder: WIRTH, Thomas, 22297 Hamburg (DE); HIEKE, Dennis, 22299 Hamburg (DE); HERRMANN, Udo, 63867 Johannesberg (DE); TÜGEL, Caspar, 20253 Hamburg (DE); KRUMBHOLZ, Peter, 63869 Jakobsthal (DE)
(74) Vertreter: Patentship Patentanwaltsgesellschaft mbH

(56) Entgegenhaltungen:
- FR-A1- 3 039 104
- US-A1- 2017 107 055

## Beschreibung

Die Erfindung betrifft ein autonomes Flurförderzeug, insbesondere Kommissionier-Flurförderzeug, das ein Fahrwerk zum Abstützen des Flurförderzeugs auf einer Fahrbahn aufweist.

Kommissionier-Flurförderzeuge werden zum Kommissioniern von Waren verwendet, wobei Packstücke zwischen einer Ladefläche des Flurförderzeugs, die von einer Ablagefläche an dem Flurförderzeug oder von einem mitgeführten Ladungsträger, beispielsweise einer Palette oder Trolley, gebildet sein kann, und einem seitlich neben dem Flurförderzeug befindlichen Ablageort bewegt werden. Der Ablageort kann ein Regalfach eines seitlich neben dem Flurförderzeug befindlichen Regals oder auch eine seitlich neben dem Flurförderzeug befindliche Palette sein. Um diesen Vorgang zu automatisieren, ist es bereits bekannt, das Kommissionier-Flurförderzeug als autonomes und somit fahrerloses Flurförderzeug auszuführen und das Flurförderzeug für die Handhabung der Packstücke mit einem Lasthandhabungsmanipulatorarm zu versehen. Mit dem Lasthandhabungsmanipulatorarm kann ein außerhalb der Grundfläche des Flurförderzeugs an einem seitlich neben dem Flurförderzeug befindlichen Ablageort befindliches Packstück aufgenommen und auf der Ablagefläche des Flurförderzeugs abgelegt werden. Gleiches gilt für den umgekehrten Vorgang, wobei mit dem Lasthandhabungsmanipulatorarm ein auf der Ladefläche des Flurförderzeugs befindliches Packstück aufgenommen und an einem seitlich neben dem Flurförderzeug und somit außerhalb der Grundfläche des Flurförderzeugs befindlichen Ablageort abgelegt werden.

Das Dokument US 2017 / 107055 A1 wird als nächstliegender Stand der Technik angesehen und offenbart den Oberbegriff des Anspruchs 1.

Dokument FR 3 039 104 A1 offenbart ein autonomes Flurförderzeug mit ähnlichen Merkmalen.

Ein gattungsgemäßes Kommissionier-Flurförderzeug mit einem auskragenden Lasthandhabungsmanipulatorarm, der einen Bereich außerhalb der Grundfläche des Flurförderzeugs erreichen kann, ist aus der EP 2 987 761 A1 bekannt.

Bei dem Betrieb des Lasthandhabungsmanipulatorarms, beispielsweise während der Handhabung des Packstückes, kann es hierbei vorkommen, dass das mit dem Fahrwerk auf der Fahrbahn abgestützte Flurförderzeug in der Standsicherheit gefährdet ist und kippt. Dies kann insbesondere dann auftreten, wenn der Lasthandhabungsmanipulatorarm einen hohen Aufbau an dem Flurförderzeug darstellt oder wenn große dynamische Lasten im Betrieb des Lasthandhabungsmanipulatorarms auftreten.

Durch ein Kippen des Flurförderzeugs wird der Kommissioniervorgang verlangsamt und es kann zu Beschädigungen an dem Flurförderzeug, dem Lasthandhabungsmanipulatorarm oder an dem gehandhabten Packstück kommen.

Der vorliegenden Erfindung liegt die Aufgabe zugrunde, ein Flurförderzeug der eingangs genannten Gattung zur Verfügung zu stellen, das die genannten Nachteile vermeidet.

Diese Aufgabe wird erfindungsgemäß dadurch gelöst, dass das Fahrwerk an einem Fahrwerkchassis angeordnet ist und das Flurförderzeug ein Abstützchassis aufweist, das mit Abstützmitteln versehen ist, wobei das Abstützchassis relativ zu dem Fahrwerkchassis zwischen einer angehobenen Stellung, in der die Abstützmittel von der Fahrbahn abgehoben sind, und einer abgesenkten Stellung verstellbar ist, in der die Abstützmittel auf die Fahrbahn abgesenkt sind.

Das Flurförderzeug weist somit mit dem Abstützchassis und dem Fahrwerkchassis zwei relativ zueinander in der Höhe verstellbare Chassis auf. Der erfindungsgemäße Gedanke besteht somit darin, bei einem autonomen Flurförderzeug, insbesondere Kommissionier-Flurförderzeug, durch Absenken des Abstützchassis, wobei die Abstützmittel mit der Fahrbahn in Kontakt gelangen und somit das Flurförderzeug nicht mehr mit dem Fahrwerk, sondern mit den Abstützmitteln des Abstützchassis auf der Fahrbahn aufsteht und abgestützt ist, die Standsicherheit zeitweise zu erhöhen, so dass die Gefahr eines Kippens des Flurförderzeugs vermieden wird. Dadurch kann insbesondere dann, wenn sich ein Lasthandhabungsmanipulatorarm des Flurförderzeugs außerhalb der Grundfläche des Flurförderzeugs befindet, die Standsicherheit des Flurförderzeugs deutlich erhöht werden. Zudem ermöglicht es das Abstützchassis in der abgesenkten Stellung, die Standsicherheit des Flurförderzeugs zu erhöhen, wenn die Räder des Fahrwerks des Flurförderzeugs schräg stehen. Durch Betätigen des Abstützchassis in die abgesenkte Stellung kann mit der damit einhergehenden Erhöhung der Standsicherheit des Flurförderzeugs der Kommissioniervorgang beschleunigt werden und die Gefahr von Beschädigungen an dem Flurförderzeug, dem Lasthandhabungsmanipulatorarm oder an dem gehandhabten Packstück können minimiert werden. Da die Abstützmittel an dem Abstützchassis angeordnet sind, werden alle an dem Abstützchassis angeordneten Abstützmittel gleichzeitig abgesenkt und angehoben, wodurch sich der Komissioniervorgang weiter beschleunigen lässt, da Wartezeiten zum Absenken und Anheben der Abstützmittel minimiert werden.

Gemäß einer vorteilhaften Ausführungsform der Erfindung sind die Abstützmittel in der abgesenkten Stellung außerhalb des Fahrwerkes angeordnet. Bevorzugt weisen die Abstützmittel in der abgesenkten Stellung einen Abstand zu den Rädern des Fahrwerks in Fahrzeugquerrichtung und/oder in Fahrzeuglängsrichtung auf, wodurch auf einfache Weise erzielt, dass die von den Abstützmitteln aufgespannte Aufstandsfläche größer ist als die von den Rädern des Fahrwerks aufgespannte Aufstandsfläche, wodurch eine Erhöhung der Standsicherheit des Flurförderzeus auf einfache Weise erzielt werden kann.

Gemäß einer vorteilhaften Ausgestaltungsform der Erfindung ist zum Verstellen des Abstützchassis zwischen der angehobene Stellung und der abgesenkten Stellung eine zwischen dem Fahrwerkchassis und dem Abstützchassis angeordnete Hubeinrichtung vorgesehen ist. Mit einer Hubeinrichtung können das Abstützchassis und damit die an dem Abstützchassis angeordneten Abstützmittel auf einfache und schnelle Weise angehoben und abgesenkt werden.

Vorteilhafterweise steht in der angehobenen Stellung des Abstützchassis das Fahrwerk auf der Fahrbahn auf. Das Flurförderzeug stützt sich somit für einen Fahrbetrieb mit den Rädern des Fahrwerks auf der Fahrbahn ab.

In der abgesenkten Stellung des Abstützchassis ist gemäß einer vorteilhaften Weiterbildung der Erfindung das Fahrwerk von der Fahrbahn abgehoben. Das Flurförderzeug stützt sich somit für einen Kommissioniervorgang nur mit den Abstützmitteln auf der Fahrbahn ab. Durch das Abheben des Fahrwerks von der Fahrbahn wird eine kinematische Überbestimmung vermieden, da in der abgesenkten Stellung des Abstützchassis das Flurförderzeug nur mit den Abstützmitteln des Abstützchassis auf der Fahrbahn aufsteht und abgestützt ist. Dadurch kann die Standsicherheit des Flurförderzeugs während des Kommissioniervorgangs bei stehendem Flurförderzeug weiter erhöht werden.

Besondere Vorteile ergeben sich, wenn das Abstützchassis das Fahrwerkchassis in Umfangsrichtung rahmenartig umgibt und/oder deckelartig umschließt. Das Flurförderzeug weist somit mit dem Abstützchassis und dem Fahrwerkchassis zwei relativ zueinander in der Höhe verstellbare Chassis auf, wobei das Fahrwerkchassis, das mit dem Fahrwerk versehen ist, ein inneres Chassis bildet und das Abstützchassis, das mit den Abstützmitteln versehen ist, ein äußeres Chassis bildet.

Gemäß einer vorteilhaften Weiterbildung der Erfindung ist die Hubeinrichtung als Scherenhubeinrichtung ausgebildet. Eine Scherenhubeinrichtung ermöglicht bei geringem Bauraumbedarf einen großen Hubbereich und eignet sich daher besonders gut für die Höhenverstellbarkeit des Abstützchassis relativ zu dem Fahrwerkchassis.

Weitere Vorteile sind erzielbar, wenn gemäß einer vorteilhaften Ausführungsform der Erfindung das Abstützchassis in der angehobenen Stellung mit der Unterkante eine maximale Spalthöhe zur Fahrbahn von 35mm aufweist. Dadurch wird eine hohe Betriebssicherheit des Flurförderzeugs erzielt, da die Abstützmittel an dem Abstützchassis hierdurch möglichst weit außen platziert werden können, ohne dass Personen gefährdet werden, die sich in der Umgebung des Flurförderzeugs befinden. Die Standsicherheitserhöhung durch das Abstützchassis kann somit ohne Gefährdung von Personen erfolgt, die sich in der Umgebung des Flurförderzeugs befinden.

Gemäß einer bevorzugten Ausführungsform der Erfindung ist das Abstützchassis mit vier Abstützmitteln versehen, die jeweils in den Eckbereichen des Abstützchassis angeordnet sind. Es versteht sich, dass auch weniger oder mehr Abstützmittel an dem Abstützchassis vorgesehen werden können. Bei vier Abstützmitteln sind bevorzugt drei Abstützmittel an dem Abstützchassis als starre Abstützmittel und das vierte Abstützmittel als elastisches Abstützmittel ausgebildet. Dadurch können mögliche Bodenunebenheiten der Fahrbahn auf einfache Weise ausgeglichen werden und eine stabile und sichere Abstützung des Flurförderzeugs über die Abstützmittel in der abgesenkten Stellung des Abstützchassis erzielt werden.

Die Abstützmittel können gemäß einer bevorzugten Ausgestaltungsform der Erfindung von Auswölbungen des Abstützchassis gebildet sein. Dies ermöglicht eine einfache Herstellung der Abstützmittel. Alternativ können die Abstützmittel als am Abstützchassis angeordnete Kontaktkörper, insbesondere Kunststoffkörper, oder als am Abstützchassis drehbar gelagerte Rollen oder Kugeln ausgebildet sein.

Weitere Vorteile ergeben sich, wenn die Abstützmittel am Abstützchassis einstellbar angeordnet sind. Dadurch ist eine Verstellbarkeit bzw. Justierbarkeit und/oder Nachstellbarkeit der Abstützmittel am Abstützchassis erzielbar, wodurch Toleranzen und/oder Verschleiß auf einfache Weise ausgeglichen werden können.

Gemäß einer vorteilhaften Ausführungsform der Erfindung ist das Flurförderzeug zur Handhabung von Lasten mit einem Lasthandhabungsmanipulatorarm versehen, der eine Lasttrageinrichtung aufweist, wobei der Lasthandhabungsmanipulatorarm einen Bereich außerhalb der Grundfläche des Flurförderzeugs erreichen kann. Durch Absenken des Abstützchassis kann bei dem erfindungsgemäßen Flurförderzeug auf einfache Weise die Standsicherheit des Flurförderzeugs zeitweise erhöht werden, wenn im Kommissionierbetrieb mit dem auskragenden Lasthandhabungsmanipulatorarm ein außerhalb der Grundfläche des Flurförderzeugs an einem seitlich neben dem Flurförderzeug befindlichen Ablageort befindliches Packstück aufgenommen und auf der Ladefläche des Flurförderzeugs abgelegt werden bzw. mit dem Lasthandhabungsmanipulatorarm ein auf der Ladefläche des Flurförderzeugs befindliches Packstück aufgenommen und an einem seitlich neben dem Flurförderzeug und somit außerhalb der Grundfläche des Flurförderzeugs befindlichen Ablageort abgelegt wird.

Der Lasthandhabungsmanipulatorarm kann gemäß einer vorteilhaften Ausführungsform der Erfindung als Roboterarm oder als Kranarm oder als Gelenkarm ausgebildet sein.

Besondere Vorteile ergeben sich, wenn gemäß einer Weiterbildung der Erfindung der Lasthandhabungsmanipulatorarm an dem Abstützchassis angeordnet ist. Durch eine Anordnung und Befestigung des Lasthandhabungsmanipulatorarmes an dem anhebbaren und absenkbaren Abstützchassis wird während des Kommissionierbetriebs, wobei das Abstützchassis mit den Abstützmitteln auf der Fahrbahn abgestützt ist, ein günstiger Kraftfluss erzielt, da sich der Lasthandhabungsmanipulatorarm und eine mit diesem aufgenommene Last direkt über das Abstützchassis auf der Fahrbahn abstützt, so dass die daraus resultierenden Kräfte direkt über das Abstützchassis auf der Fahrbahn abgestützt werden und ein Kraftfluss über das Fahrwerkchassis sowie über die Hubeinrichtung vermieden wird.

Die Erfindung betrifft weiterhin ein Verfahren zum Betrieb eines erfindungsgemäßen autonomen Flurförderzeugs, wobei im Fahrbetrieb des Flurförderzeugs das Abstützchassis in die angehobene Stellung betätigt wird und während des Kommissionierbetriebs, wobei Packstücke mittels des Lasthandhabungsmanipulatorarms zwischen einer Ladefläche des Flurförderzeugs und einem seitlich neben dem Flurförderzeug befindlichen Ablageort bewegt werden, das Abstützchassis in die abgesenkte Stellung betätigt wird. Durch Absenken des Abstützchassis kann bei dem erfindungsgemäßen Flurförderzeug auf einfache Weise die Standsicherheit des Flurförderzeugs zeitweise erhöht werden, wenn im Kommissionierbetrieb und somit bei stehendem Flurförderzeug mit dem auskragenden Lasthandhabungsmanipulatorarm ein außerhalb der Grundfläche des Flurförderzeugs an einem seitlich neben dem Flurförderzeug befindlichen Ablageort befindliches Packstück aufgenommen und auf der Ladefläche des Flurförderzeugs abgelegt wird bzw. mit dem Lasthandhabungsmanipulatorarm ein auf der Ladefläche des Flurförderzeugs befindliches Packstück aufgenommen und an einem seitlich neben dem Flurförderzeug und somit außerhalb der Grundfläche des Flurförderzeugs befindlichen Ablageort abgelegt wird.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes Flurförderzeug in einer perspektivischen Darstellung,
- Figur 2: das Flurförderzeug in einer Ansicht gemäß Linie A der Figur 1 mit einem in der angehobenen Stellung befindlichen Abstützchassis und
- Figur 3: das Flurförderzeug in einer Darstellung der Figur 2 mit einem in der abgesenkten Stellung befindlichen Abstützchassis.

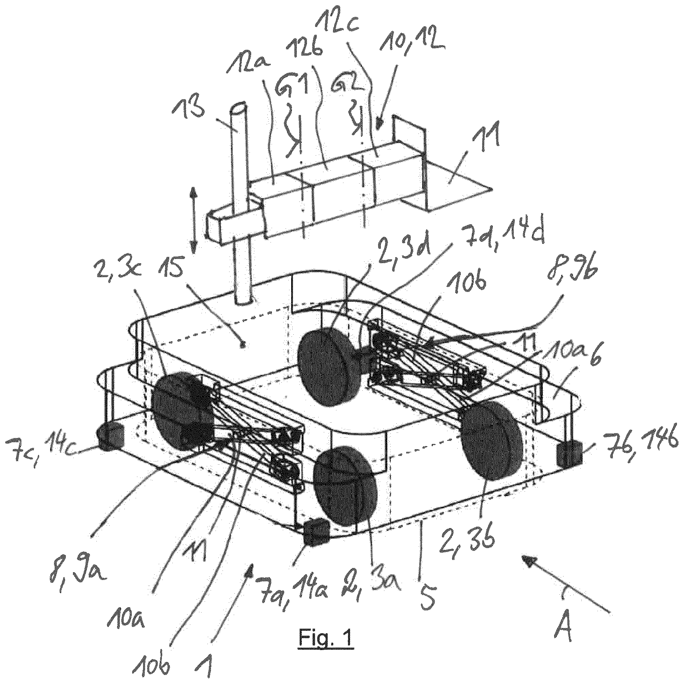

In der Figur 1 ist ein erfindungsgemäßes autonomes Flurförderzeug 1 dargestellt, das ein Fahrwerk 2 zum Abstützen des Flurförderzeugs 1 auf einer Fahrbahn FB aufweist. Das Flurförderzeug 1 ist im dargestellten Ausführungsbeispiel als Kommissionier-Flurförderzeug ausgebildet.

Das Fahrwerk 2 ist im dargestellten Ausführungsbeispiel von vier Rädern 3a, 3b, 3c, 3d gebildet. Die Räder 3a, 3b sind als Antriebsräder ausgebildet und die Räder 3c, 3d als nicht-angetrieben Nachlaufrollen. Die als Antriebsräder ausgebildeten Räder 3a, 3b können durch unterschiedliche Drehzahlen eine Differenzgeschwindigkeitslenkung des Flurförderzeugs 1 ermöglichen. Alternativ können die als Antriebsräder ausgebildeten Räder 3a, 3b um eine vertikale Achse mittels eines nicht näher dargestellten Lenkantriebs lenkbar sein, um eine Lenkung des Flurförderzeugs 1 zu erzielen.

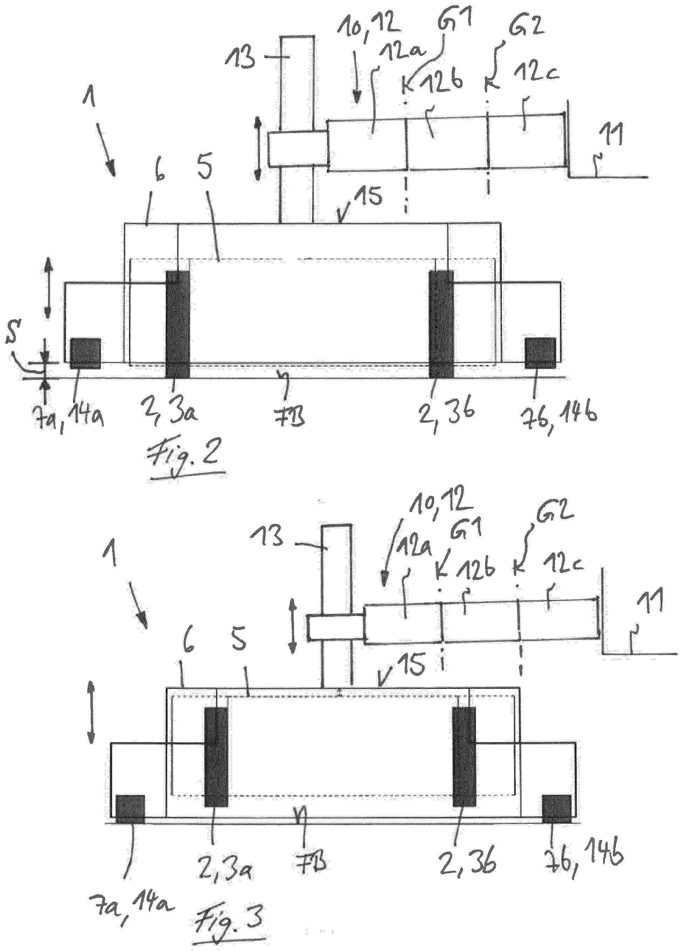

Das Flurförderzeug 1 weist erfindungsgemäß ein Fahrwerkchassis 5 auf, das mit dem Fahrwerk 2 und somit den Rädern 3a-3c versehen ist, und ein Abstützchassis 6 auf, das mit Abstützmitteln 7a, 7b, 7c, 7d versehen ist. Das Abstützchassis 6 ist relativ zu dem Fahrwerkchassis 5 zwischen einer in der Figur 2 dargestellten angehobene Stellung, in der die Abstützmittel 7a-7d von der Fahrbahn FB abgehoben sind, und einer in der Figur 3 dargestellten abgesenkten Stellung verstellbar, in der die Abstützmittel 7a-7d auf die Fahrbahn FB abgesenkt sind.

In den Figuren 1 bis 3 ist das Fahrwerkchassis 5 mit gestrichelten Linien dargestellt und das Abstützchassis 6 mit durchgezogenen Linien.

Das Abstützchassis 6 umgibt im dargestellten Ausführungsbeispiel das Fahrwerkchassis 5 in Umfangsrichtung rahmenartig. Im dargestellten Ausführungsbeispiel umschließt das Abstützchassis 6 das Fahrwerkchassis 5 weiterhin deckelartig. Das mit den Abstützmitteln 7a-7d versehene Abstützchassis 6 bildet somit ein äußeres Chassis und das mit dem Fahrwerk 2 versehene Fahrwerkchassis 5 ein inneres Chassis, das vollständig innerhalb des Abstützchassis 6 angeordnet ist.

Die an dem Abstützchassis 6 angeordneten Abstützmittel 7a-7d sind außerhalb der Räder 3a-3d des Fahrwerkes 2 angeordnet. Die Abstützmittel 7a-7d liegen somit bezüglich der Räder 3a-3d des Fahrwerks 2 weiter außen.

Zum Verstellen des Abstützchassis 6 zwischen der angehobene Stellung und der abgesenkten Stellung ist eine zwischen dem Fahrwerkchassis 5 und dem Abstützchassis 6 angeordnete Hubeinrichtung 8 vorgesehen.

Die Hubeinrichtung 8 ist im dargestellten Ausführungsbeispiel als Scherenhubeinrichtung 9a, 9b ausgebildet. An gegenüberliegenden Fahrzeugseiten ist hierbei jeweils eine Scherenhubeinrichtung 9a bzw. 9b angeordnet. Jede Scherenhubeinrichtung 9a, 9b besteht jeweils aus zwei sich kreuzenden Lenkern 10a, 10b, die an einem Schnittpunkt mittels eines Gelenks 11 miteinander verbunden sind. Jeder Lenker 10a bzw. 10b ist an einem ersten, unteren Ende an dem Fahrwerkchassis 5 befestigt und mit einem zweiten, oberen Ende an dem Abstützchassis 6 befestigt.

Wie in der Figur 2 ersichtlich ist, steht in der angehobenen Stellung des Abstützchassis 6 das Fahrwerk 2 auf der Fahrbahn FB auf, so dass sich das Flurförderzeug 1 mit den Rädern 3a-3d des Fahrwerks 2 auf der Fahrbahn FB abstützt.

Wie in der Figur 3 ersichtlich ist, ist in der abgesenkten Stellung des Abstützchassis 6 das Fahrwerk 2 von der Fahrbahn FB abgehoben, so dass sich das Flurförderzeug 1 nur mit den Abstützmitteln 7a-7d des Abstützchassis 6 auf der Fahrbahn FB abstützt.

Das Abstützchassis 6 weist bevorzugt in der angehobenen Stellung (Figur 2) mit der Unterkante eine maximale Spalthöhe S zur Fahrbahn von 35mm auf.

Im dargestellten Ausführungsbeispiel ist das Abstützchassis 6 mit vier Abstützmitteln 7a-7d versehen, die jeweils in den Eckbereichen des in Draufsicht im Wesentlichen rechteckförmigen Abstützchassis 6 angeordnet sind.

Im dargestellten Ausführungsbeispiel sind die Abstützmittel 7a-7d jeweils von am Abstützchassis 6 angeordneten Kontaktkörpern 14a-14d, beispielsweise Kunststoffkörpern, gebildet.

Bevorzugt sind die als Kontaktkörper 14a-14d ausgebildeten Abstützmittel 7a-7d am Abstützchassis 6 einstellbar angeordnet, wodurch eine Justage und Nachstellbarkeit insbesondere in vertikaler Richtung erzielt wird.

Zur Handhabung von Lasten ist das erfindungsgemäße Flurförderzeug 1 mit einem Lasthandhabungsmanipulatorarm 10 versehen, der mit einer Lasttrageinrichtung 11 versehen ist. Der Lasthandhabungsmanipulatorarm 10 kann einen Bereich außerhalb der Grundfläche des Flurförderzeugs 1 erreichen und somit seitlich auskragen, um Lasten in einem seitlich neben dem Flurförderzeug 1 befindlichen Regal oder auf einer seitlich neben dem Flurförderzeug 1 befindlichen Palette erreichen zu können.

Im dargestellten Ausführungsbeispiel ist der Lasthandhabungsmanipulatorarm 10 als Gelenkarm 12 ausgebildet, der aus mehreren Gelenkarmen 12a, 12b, 12c bestehen, die mittels vertikaler Gelenkachsen G1, G2 miteinander gelenkig verbunden sind.

Der Lasthandhabungsmanipulatorarm 10 umfasst weiterhin eine Säule 13, an der der Lasthandhabungsmanipulatorarm 10 mittels eines nicht näher dargestellten Hubantriebs in vertikaler Richtung verstellbar und somit anhebbar und absenkbar angeordnet ist.

Im dargestellten Ausführungsbeispiel ist der Lasthandhabungsmanipulatorarm 10 an dem Abstützchassis 6 angeordnet.

Das Abstützchassis 6, das das Fahrwerkchassis 5 deckelartig umschließt, weist an der Oberseite eine Ablagefläche 15 auf, die als Ladefläche ausgebildet sein kann, auf der Packstücke abgelegt werden können, oder auf der Ladungsträger, beispielsweise eine Palette oder Trolley, mitgeführt werden kann, auf den Packstücke abgelegt werden können.

Das erfindungsgemäße autonome Flurförderzeug 1 ist als Kommissionier-Flurförderzeuge zum Kommissioniern von Waren ausgebildet, wobei Packstücke zwischen der Ladefläche des Flurförderzeugs 1, die von der Ablagefläche 15 an dem Flurförderzeug 1 oder von einem auf der Ablagefläche 15 mitgeführten Ladungsträger, beispielsweise einer Palette oder Trolley, gebildet sein kann, und einem seitlich neben dem Flurförderzeug 1 befindlichen Ablageort mit dem Lasthandhabungsmanipulatorarm 10 bewegt werden. Der Ablageort kann ein Regalfach eines seitlich neben dem Flurförderzeug 1 befindlichen Regals oder auch eine seitlich neben dem Flurförderzeug 1 befindliche Palette sein. Mit dem auskragenden Lasthandhabungsmanipulatorarm 10 kann hierbei ein außerhalb der Grundfläche des Flurförderzeugs 1 an einem seitlich neben dem Flurförderzeug 1 befindlichen Ablageort befindliches Packstück aufgenommen und auf der Ladefläche des Flurförderzeugs 1 abgelegt werden. Gleiches gilt für den umgekehrten Vorgang, wobei mit dem Lasthandhabungsmanipulatorarm 10 ein auf der Ladefläche des Flurförderzeugs 1 befindliches Packstück aufgenommen und an einem seitlich neben dem Flurförderzeug 1 und somit außerhalb der Grundfläche des Flurförderzeugs 1 befindlichen Ablageort abgelegt werden.

Im Fahrbetrieb des Flurförderzeugs 1 ist das Abstützchassis 6 mittels der Hubeinrichtung 8 in die in der Figur 2 dargestellte angehobene Stellung betätigt. Im Fahrbetrieb befindet sich der Lasthandhabungsmanipulatorarm 10 und eine aufgenommene Last innerhalb der Grundfläche des Flurförderzeugs 1, so dass der Schwerpunkt innerhalb der Aufstandsfläche der Räder 3a-3d des Fahrwerks 2 ist.

Während des Kommissioniervorgangs, wobei eine Last, beispielsweise Packstücke, mittels des aus der Grundfläche des Flurförderzeugs 1 auskragenden Lasthandhabungsmanipulatorarm 10 zwischen der Ladefläche des Flurförderzeugs und einem seitlich neben dem Flurförderzeug befindlichen Ablageort bewegt werden und wobei das Flurförderzeug 1 stillsteht, wird mittels der Hubeinrichtung 8 das Abstützchassis 6 in die in der Figur 3 dargestellte abgesenkte Stellung betätigt. Da in der abgesenkten Stellung des Abstützchassis 6 das Flurförderzeug 1 mit den an dem Abstützchassis 6 angeordneten Abstützmitteln 7a-7d auf der Fahrbahn FB aufsteht und auf der Fahrbahn FB abstützt, wobei die Abstützmittel 7a-7d weiter außen am Flurförderzeug 1 angeordnet sind wie die Räder 3a-3d des Fahrwerks 2, wird durch das Absenken des Abstützchassis 6 mit den weiter außen liegenden Abstützmitteln 7a-7d die Standsicherheit des Flurförderzeugs 1 bei einem Kommissioniervorgang mit auskragendem Lasthandhabungsmanipulatorarm 10 erhöht. Der Kommissioniervorgang wird beschleunigt und Beschädigungen an dem Flurförderzeug 1, dem Lasthandhabungsmanipulatorarm 10 oder an dem gehandhabten Packstück können vermieden werden.

Die Hubeinrichtung 8 ist bevorzugt derart ausgebildet, dass die Hubeinrichtung 8 in einer unteren Hubstufe die Abstützmittel 7a-7d auf die Fahrbahn FB absenken kann, in einer mittleren Hubstufe das Unterfahren eines Ladungsträgers, beispielsweise einer Palette oder eines Trolleys, durch das Flurförderzeug 1 ermöglichen kann und in einer oberen Hubstufe den Ladungsträger anheben und auf die Ablagefläche 15 aufnehmen und somit verfahren kann. Damit wird der Bauaufwand für die Standsicherheitserhöhung weiter verringert, da die bereits für die Aufnahme eines Ladungsträgers vorhandene Hubeinrichtung 8 auch zum Absenken des Abstützchassis 8 und somit dem Aufsetzen der Abstützmittel 7a-7d auf der Fahrbahn FB zur Standsicherheitserhöhung des Flurförderzeugs 1 verwendet wird.

Durch die Anordnung der Abstützmittel 7a-7d an dem äußeren umlaufenden Abstützchassis 6 werden zudem Personen in der Umgebung des Flurförderzeugs beim Absenken des Abstützchassis 6 vor Quetschungen geschützt, so dass keine Überwachung von Quetsch- und Scherstellen erforderlich ist.

Die Erfindung ist nicht auf das dargestellte Ausführungsbeispiel beschränkt.

Als Abstützmittel 7a-7d sind alternativ zu den Kontaktkörpern 14a-14d andere Funktionsträger möglich, beispielsweise drehbar gelagerte Rollen oder Kugeln oder Auswölbungen an der Unterseite des Abstützchassis 6. Die Abstützmittel 7a-7d weisen bevorzugt an der Unterseite eine kugelige Form auf oder sind drehbar, um Bodenunebenheiten ausgleichen zu können.

Die Abstützmittel 7a-7d können auf einer Höhe angeordnet sein oder auf verschiedenen Höhen. Sofern die Abstützmittel 7a-7b auf verschiedenen Höhen angeordnet sind, beispielsweise die Abstützmittel 7a, 7c an einer Fahrzeugseite auf einer ersten Höhe und die Abstützmittel 7b, 7d an der gegenüberliegenden Fahrzeugseite auf einer zweiten Höhe, ist beim Absenken des Abstützchassis 6 mit den Abstützmitteln 7a-7d auf die Fahrbahn eine gezielte Schiefstellung und/oder Ausrichtung des Flurförderzeugs 1 zu einer Richtung hin erzielbar.

## Patentansprüche

1. Autonomes Flurförderzeug (1), insbesondere Kommissionier-Flurförderzeug, das ein Fahrwerk (2) zum Abstützen des Flurförderzeugs (1) auf einer Fahrbahn (FB) aufweist, wobei das Fahrwerk (2) an einem Fahrwerkchassis (5) angeordnet ist und das Flurförderzeug (1) ein Abstützchassis (6) aufweist, **dadurch gekennzeichnet, dass** das Abstützchassis mit Abstützmitteln (7a-7d) versehen ist, wobei das Abstützchassis (6) relativ zu dem Fahrwerkchassis (5) zwischen einer angehobenen Stellung, in der die Abstützmittel (7a-7d) von der Fahrbahn (FB) abgehoben sind, und einer abgesenkten Stellung verstellbar ist, in der die Abstützmittel (7a-7d) auf die Fahrbahn (FB) abgesenkt sind.

2. Autonomes Flurförderzeug nach Anspruch 1, **dadurch gekennzeichnet, dass** die Abstützmittel (7a-7d) in der abgesenkten Stellung außerhalb des Fahrwerkes (2) angeordnet sind.

3. Autonomes Flurförderzeug nach Anspruch 1 oder 2, **dadurch gekennzeichnet, dass** zum Verstellen des Abstützchassis (6) zwischen der angehobene Stellung und der abgesenkten Stellung eine zwischen dem Fahrwerkchassis (5) und dem Abstützchassis (6) angeordnete Hubeinrichtung (8) vorgesehen ist.

4. Autonomes Flurförderzeug nach einem der Ansprüche 1 bis 3, **dadurch gekennzeichnet, dass** in der angehobenen Stellung des Abstützchassis (6) das Fahrwerk (2) auf der Fahrbahn (FB) aufsteht.

5. Autonomes Flurförderzeug nach einem der Ansprüche 1 bis 4, **dadurch gekennzeichnet, dass** in der abgesenkten Stellung des Abstützchassis (6) das Fahrwerk (2) von der Fahrbahn (FB) abgehoben ist.

6. Autonomes Flurförderzeug nach einem der Ansprüche 1 bis 5, **dadurch gekennzeichnet, dass** das Abstützchassis (6) das Fahrwerkchassis (5) in Umfangsrichtung rahmenartig umgibt und/oder deckelartig umschließt.

7. Autonomes Flurförderzeug nach einem der Ansprüche 1 bis 6, **dadurch gekennzeichnet, dass** die Hubeinrichtung (8) als Scherenhubeinrichtung (9a; 9b) ausgebildet ist.

8. Autonomes Flurförderzeug nach einem der Ansprüche 1 bis 7, **dadurch gekennzeichnet, dass** das Abstützchassis (6) in der angehobenen Stellung mit der Unterkante eine maximale Spalthöhe (S) zur Fahrbahn von 35mm aufweist.

9. Autonomes Flurförderzeug nach einem der Ansprüche 1 bis 8, **dadurch gekennzeichnet, dass** das Abstützchassis (6) mit vier Abstützmitteln (7a, 7b, 7c, 7d) versehen ist, die jeweils in den Eckbereichen des Abstützchassis (6) angeordnet sind.

10. Autonomes Flurförderzeug nach einem der Ansprüche 1 bis 9, **dadurch gekennzeichnet, dass** die Abstützmittel (7a-7d) von Auswölbungen des Abstützchassis (6) oder als am Abstützchassis (6) angeordnete Kontaktkörper (14a; 14b; 14c; 14d), insbesondere Kunststoffkörper, oder als am Abstützchassis (6) drehbar gelagerte Rollen oder Kugeln ausgebildet sind.

11. Autonomes Flurförderzeug nach einem der Ansprüche 1 bis 10, **dadurch gekennzeichnet, dass** die Abstützmittel (7a-7d) am Abstützchassis (6) einstellbar angeordnet sind.

12. Autonomes Flurförderzeug nach einem der Ansprüche 1 bis 11, **dadurch gekennzeichnet, dass** das Flurförderzeug (1) zur Handhabung von Lasten mit einem Lasthandhabungsmanipulatorarm (10) versehen ist, der eine Lasttrageinrichtung (11) aufweist, wobei der Lasthandhabungsmanipulatorarm (10) einen Bereich außerhalb der Grundfläche des Flurförderzeugs (1) erreichen kann.

13. Autonomes Flurförderzeug nach Anspruch 12, **dadurch gekennzeichnet, dass** der Lasthandhabungsmanipulatorarm (10) als Roboterarm oder als Kranarm oder als Gelenkarm (12) ausgebildet ist.

14. Autonomes Flurförderzeug nach Anspruch 12 oder 13, **dadurch gekennzeichnet, dass** der Lasthandhabungsmanipulatorarm (10) an dem Abstützchassis (6) angeordnet ist.

15. Verfahren zum Betrieb eines autonomen Flurförderzeugs nach einem der vorangegangenen Ansprüche, **dadurch gekennzeichnet, dass** im Fahrbetrieb des Flurförderzeugs (1) das Abstützchassis (6) in die angehobene Stellung betätigt wird und während des Kommissionierbetriebs, wobei Packstücke mittels des Lasthandhabungsmanipulatorarms (10) zwischen einer Ladefläche (15) des Flurförderzeugs (1) und einem seitlich neben dem Flurförderzeug (1) befindlichen Ablageort bewegt werden, das Abstützchassis (6) in die abgesenkte Stellung betätigt wird.

## Claims

1. Autonomous industrial truck (1), in particular an industrial truck for picking, which for supporting the industrial truck (1) on a carriageway (FB) has a running gear (2), wherein the running gear (2) is disposed on a running gear chassis (5) and the industrial truck (1) has a support chassis (6), **characterized in that** the support chassis is provided with supporting means (7a-7d), wherein the support chassis (6) relative to the running gear chassis (5) is adjustable between a raised position in which the supporting means (7a-7d) are raised from the carriageway (FB) and a lowered position in which the supporting means (7a-7d) are lowered onto the carriageway (FB).

2. Autonomous industrial truck according to Claim 1, **characterized in that** the supporting means (7a-7d) in the lowered position are disposed outside the running gear (2).

3. Autonomous industrial truck according to Claim 1 or 2, **characterized in that** a lifting installation (8) for adjusting the support chassis (6) between the raised position and the lowered position is disposed between the running gear chassis (5) and the support chassis (6).

4. Autonomous industrial truck according to one of Claims 1 to 3, **characterized in that** the running gear (2) in the raised position of the support chassis (6) stands on the carriageway (FB).

5. Autonomous industrial truck according to one of Claims 1 to 4, **characterized in that** the running gear (2) in the lowered position of the support chassis (6) is raised from the carriageway (FB).

6. Autonomous industrial truck according to one of Claims 1 to 5, **characterized in that** the support chassis (6) in the circumferential direction surrounds the running gear chassis (5) in the manner of a frame and/or in the manner of a lid.

7. Autonomous industrial truck according to one of Claims 1 to 6, **characterized in that** the lifting installation (8) is configured as a scissors lift installation (9a; 9b).

8. Autonomous industrial truck according to one of Claims 1 to 7, **characterized in that** the support chassis (6) in the raised position by way of the lower edge has a maximum gap height (S) of 35 mm in relation to the carriageway.

9. Autonomous industrial truck according to one of Claims 1 to 8, **characterized in that** the support chassis (6) is provided with four supporting means (7a, 7b, 7c, 7d) which are in each case disposed in the corner regions of the support chassis (6).

10. Autonomous industrial truck according to one of Claims 1 to 9, **characterized in that** the supporting means (7a-7d) are configured by convexities of the support chassis (6), or as contact members (14a; 14b; 14c; 14d), in particular plastics material members, disposed on the support chassis (6), or as rollers or spheres rotatably mounted on the support chassis (6).

11. Autonomous industrial truck according to one of Claims 1 to 10, **characterized in that** the supporting means (7a-7d) are disposed so as to be adjustable on the support chassis (6).

12. Autonomous industrial truck according to one of Claims 1 to 11, **characterized in that** the industrial truck (1) for handling loads is provided with a load handling manipulator arm (10) which has a load bearing installation (11), wherein the load handling manipulator arm (10) can reach a region outside the footprint of the industrial truck (1).

13. Autonomous industrial truck according to Claim 12, **characterized in that** the load handling manipulator arm (10) is configured as a robotic arm or as a crane boom or as an articulated boom (12).

14. Autonomous industrial truck according to Claim 12 or 13, **characterized in that** the load handling manipulator arm (10) is disposed on the support chassis (6).

15. Method for operating an autonomous industrial truck according to one of the preceding claims, **characterized in that** the support chassis (6) in the travelling operation of the industrial truck (1) is activated to the raised position, and the support chassis (6) during the picking operation, wherein packages by means of the load handling manipulator arm (10) are moved between a loading space (15) of the industrial truck (1) and a depositing location situated laterally beside the industrial truck (1), is activated to the lowered position.

## Revendications

1. Chariot de manutention autonome (1), en particulier chariot de préparation des commandes, lequel comprend un train roulant (2) servant à supporter le chariot de manutention (1) sur une voie de circulation (FB), le train roulant (2) étant disposé sur un châssis de train roulant (5) et le chariot de manutention (1) comprenant un châssis de support (6), **caractérisé en ce que** le châssis de support est doté de moyens de support (7a-7d), le châssis de support (6) pouvant être déplacé par rapport au châssis de train roulant (5) entre une position élevée dans laquelle les moyens de support (7a-7d) sont soulevés de la voie de circulation (FB) et une position abaissée dans laquelle les moyens de support (7a-7d) sont abaissés sur la voie de circulation (FB).

2. Chariot de manutention autonome selon la revendication 1, **caractérisé en ce que** les moyens de support (7a-7d) sont disposés à l'extérieur du train roulant (2) dans la position abaissée.

3. Chariot de manutention autonome selon la revendication 1 ou 2, **caractérisé en ce qu'**un dispositif de levage (8) disposé entre le châssis de train roulant (5) et le châssis de support (6) est prévu pour déplacer le châssis de support (6) entre la position élevée et la position abaissée.

4. Chariot de manutention autonome selon l'une des revendications 1 à 3, **caractérisé en ce que** le train roulant (2) se tient debout sur la voie de circulation (FB) dans la position élevée du châssis de support (6).

5. Chariot de manutention autonome selon l'une des revendications 1 à 4, **caractérisé en ce que** le train roulant (2) est soulevé de la voie de circulation (FB) dans la position abaissée du châssis de support (6).

6. Chariot de manutention autonome selon l'une des revendications 1 à 5, **caractérisé en ce que** le châssis de support (6) entoure le châssis de train roulant (5) à la manière d'un cadre dans la direction périphérique et/ou le cerne à la manière d'un couvercle.

7. Chariot de manutention autonome selon l'une des revendications 1 à 6, **caractérisé en ce que** le dispositif de levage (8) est réalisé en tant que dispositif de levage à ciseaux (9a ; 9b).

8. Chariot de manutention autonome selon l'une des revendications 1 à 7, **caractérisé en ce que**, dans la position élevée, le bord inférieur du châssis de support (6) présente une hauteur d'interstice (S) de 35 mm par rapport à la voie de circulation.

9. Chariot de manutention autonome selon l'une des revendications 1 à 8, **caractérisé en ce que** le châssis de support (6) est doté de quatre moyens de support (7a, 7b, 7c, 7d) qui sont disposés respectivement dans les régions de coin du châssis de support (6).

10. Chariot de manutention autonome selon l'une des revendications 1 à 9, **caractérisé en ce que** les moyens de support (7a-7d) sont formés par des bombements du châssis de support (6) ou sont formés en tant que corps de contact (14a ; 14b ; 14c ; 14d) disposés sur le châssis de support (6), en particulier en tant que corps en matière synthétique, ou en tant que rouleaux ou sphères montés rotatifs sur le châssis de support (6).

11. Chariot de manutention autonome selon l'une des revendications 1 à 10, **caractérisé en ce que** les moyens de support (7a-7d) sont disposés de manière réglable sur le châssis de support (6).

12. Chariot de manutention autonome selon l'une des revendications 1 à 11, **caractérisé en ce que**, pour la manutention de charges, le chariot de manutention (1) est doté d'un bras de manipulateur de manutention de charge (10) qui comprend un dispositif de support de charge (11), le bras de manipulateur de manutention de charge (10) pouvant atteindre une région à l'extérieur de la surface de base du chariot de manutention (1).

13. Chariot de manutention autonome selon la revendication 12, **caractérisé en ce que** le bras de manipulateur de manutention de charge (10) est réalisé en tant que bras de robot ou en tant que bras de grue ou en tant que bras articulé (12).

14. Chariot de manutention autonome selon la revendication 12 ou 13, **caractérisé en ce que** le bras de manipulateur de manutention de charge (10) est disposé sur le châssis de support (6).

15. Procédé de fonctionnement d'un chariot de manutention autonome selon l'une des revendications précédentes, **caractérisé en ce que** dans le fonctionnement de conduite du chariot de manutention (1), le châssis de support (6) est actionné dans la position élevée et, pendant le fonctionnement de préparation des commandes, dans lequel des unités d'emballage sont déplacées au moyen du bras de manipulateur de manutention de charge (10) entre une surface de chargement (15) du chariot de manutention (1) et un emplacement de stockage situé latéralement près du chariot de manutention (1), le châssis de support (6) est actionné dans la position abaissée.
